(19) **Europäisches Patentamt**

**European Patent Office**

**Office européen des brevets**

(11) **EP 0 971 006 A1**

(12) **EUROPÄISCHE PATENTANMELDUNG**

(43) Veröffentlichungstag:
12.01.2000 Patentblatt 2000/02

(51) Int. Cl.⁷: **C09D 5/34**, C09D 7/04,
C09D 11/02

(21) Anmeldenummer: 99112303.5

(22) Anmeldetag: 26.06.1999

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **09.07.1998 DE 19830597**

(71) Anmelder: **Borchers GmbH**
**40789 Monheim (DE)**

(72) Erfinder:
• **Link, Günter**
**38644 Goslar (DE)**
• **Edelmann, Dirk, Dr.**
**42277 Wuppertal (DE)**

(74) Vertreter:
**Feldhues, Michael L.F., Dr. et al**
**Bayer Aktiengesellschaft,**
**Konzernbereich RP,**
**Patente und Lizenzen**
**51368 Leverkusen (DE)**

(54) **Verwendung spezieller Zinnverbindungen als Additive zur Vermeidung von Hautbildung in lufttrocknenden Bindemitteln**

(57)    Die Erfindung betrifft die Verwendung spezieller Zinnverbindungen als Additive zur Vermeidung von Hautbildung in lufttrocknenden Bindemitteln. Als spezielle Zinnverbindung werden Zinnsalze organischer Säuren eingesetzt.

EP 0 971 006 A1

**Beschreibung**

Die Erfindung betrifft die Verwendung spezieller Zinnverbindungen als Additive zur Vermeidung von Hautbildung in lufttrocknenden Bindemitteln. Als spezielle Zinnverbindung werden Zinnsalze organischer Säuren eingesetzt.

Öle und Bindemittel, die durch Einwirkung von Sauerstoff (vorzugsweise aus der Luft) bei Raumtemperatur oder bei höheren Temperaturen mittels Zusatz von Trockenstoffen, z.B. Metallseifen von Übergangsmetallen (die Lösungen von Trockenstoffen in organischen Lösemitteln oder auch Wasser bezeichnet man als „Sikkative") „oxidativ dreidimensional vernetzen und so von der flüssigen Phase in die feste übergehen, können bei der Lagerung in offenen oder geschlossenen Gefäßen an ihrer Oberfläche eine Haut bilden. Diese noch vor der eigentlichen Applikation des Lackes stattfindende Vernetzung ist in einem hohem Maße unerwünscht, da sie z.B. die Handhabung des Lackes erschwert, indem man zuerst die Haut entfernen muß.

Bei fortschreitender Hautbildung kann in extremen Fällen der gesamte Lack in dem Gefäß nicht mehr benutzt werden. Auch bedeutet Hautbildung eine erhebliche Verkürzung der Lagerfähigkeit des Lackes bzw. der Farbe. Dies ist gleichbedeutend mit einem beachtlichen Wertverlust der Farbe.

Eine Ursache für die Hautbildung ist u.a. eine Anreicherung von bestimmten Sikkativen an der Oberfläche. Durch den Einbau von Sikkativen in der Lackhaut werden so die Trocknungseigenschaften des darunterliegenden Restes des Lackes negativ beeinflußt.

Es ist daher notwendig und Stand der Technik, dem Lack Substanzen zuzugeben, welche die Reaktion mit Luftsauerstoff an der (Lack)-Flüssigkeitsoberfläche, also im Gefäß hemmen. Solche Substanzen werden auch als Antioxidantien oder Hautverhinderungsmittel bzw. -Additive bezeichnet. Eine Auflistung solcher bekannten Verbindungen findet sich z.B. in H. Kittel; Lehrbuch der Lacke und Beschichtungen; Colomb Verlag; 1976 oder auch W. Kurze in Ullmann, Lexikon der Chemie, Band 8 Seite 19 ff (5.Auflage).

Die wichtigsten Verbindungsklassen nach dem Stand der Technik für die Lack- und Druckfarbenindustrie sind phenolische Verbindungen und Oxime. Die phenolischen Hautverhinderer weisen oft deutliche Antrocknungsverzögerungen auf, so daß sie alleine nur in speziellen Formulierungen eingesetzt werden können. Oxime, wie z.B. das Methylethylketoxim, zeigen hingegen aufgrund ihrer Flüchtigkeit nur eine leichte Antrocknungsverzögerung. Der Nachteil dieser Verbindungsklasse liegt in ihrer toxikologischen Einstufung. Dies bedeutet, daß aufwendige Schutzmaßnahmen bei der Verarbeitung und bei der Formulierung solcher Lacke nötig sind.

Eine besondere Anwendung von Methylethylketoxim ist daher die Besprühung von hochviskosen Lacksystemen in Dosen oder ähnlichen Gefäßen. Hierbei wird das Lacksystem ohne ein Antioxidant in ein Gefäß abgefüllt, mit dem Antioxidant besprüht und anschließend unter Unterdruck verschlossen. Dieses Verfahren findet insbesondere bei Druckfarben Anwendung. Der Vorteil dieses Verfahrens ist der geringe Bedarf an Antioxidantien (bezogen auf die Gesamtmenge an Farbe) und die sehr hohe mögliche Lagerzeit solcher Lacke. Jedoch muß hierbei Methylethylketoxim versprüht werden, was zu erhöhtem Sicherheitsaufwand führt.

Es war somit Aufgabe der vorliegenden Erfindung, Antioxidantien (Hautverhinderungsmittel) bereitzustellen, die zum einen keine negativen Auswirkungen auf das Trocknungsverhalten und auch auf die Eigenschaften des applizierten Filmes der entsprechenden Farben zeigen und besonders keine nachteiligen toxikologischen Eigenschaften besitzen. Speziell sollte es auch Aufgabe der Erfindung sein, Antioxidantien bereitzustellen, die nur oberflächlich auf eine bereits fertig formulierte und in ein Gefäß für die Lagerung abgefüllte Farbe appliziert werden können.

Gegenstand der Erfindung ist die Verwendung von Zinn-(II) und Zinn-(IV)-Verbindungen der allgemeinen Formeln (I) und (II)

$$R_1\text{-COO-Sn-OCC-}R_2 \tag{I},$$

in welcher

$R^1$ und $R^2$ unabhängig voneinander für gegebenenfalls verzweigtes $C_1\text{-}C_{18}$-Alkyl, $C_5\text{-}C_7$-Cycloalkyl oder Phenyl stehen,
und

$$(R_1\text{-COO})(R_2\text{-COO})_n\text{-Sn-}(R_3)(R_4)_m \tag{II},$$

in welcher

$R^1$, $R^2$, $R^3$ und $R^4$ unabhängig voneinander für gegebenenfalls verzweigtes $C_1\text{-}C_{18}$-Alkyl, $C_5\text{-}C_7$-Cycloalkyl oder Phenyl,
und

n und m unabhängig voneinander für die Zahl 0, 1 oder 2 stehen, wobei (n + m) = 2 ist, stehen, als Additiv zur Vermeidung von Hautbildung in lufttrocknenden Bindemitteln.

Bevorzugt sind Zinn-di-octoate.

Erfindungsgemäß können die Verbindungen der Formeln (I) und (II) auch in beliebigen Mischungen einngesetzt werden. Sie wirken vorzugsweise als Antioxidantien. Sie können in Substanz oder in Form von Lösungen in organischen Lösemitteln eingesetzt werden. Hierbei sind alle üblichen Lösemittel, z.B. Aromaten, Fettsäureester, Testbenzine, Ketone oder Alkohole möglich. Bevorzugt sind Lösungen in nichtflüchtigen niedrigviskosen Flüssigkeiten. Besonders bevorzugt sind $C_{14}$-$C_{22}$-Fettsäuremethylester. Es werden Lösungen von 5 bis 15 Gew.-% Zinn-(II) und Zinn-(IV)-Verbindungen eingesetzt.

Bei der erfindungsgemäßen Verwendung der Sn(II)- und Sn(IV)-Verbindungen als Hautverhinderungsadditive in oxidativ trocknenden Lacksystemen, werden diese der Farbe im Gefäß zugesetzt, bevor diese appliziert wird. Für die Anwendung können die Hautverhinderungsmittel auch in beliebigen Abmischungen untereinander eingesetzt werden.

Die erfindungsgemäße Verwendung ist vorzugsweise für oxidativ trocknende Druckfarben und oxidativtrocknende Spachtelmassen geeignet.

Bei der erfindungsgemäßen Verwendung werden die Verbindungen der Formeln I und II gegebenenfalls in einem Lösemittel auf die Oberfläche eines abgefüllten und geöffneten Lackansatzes(mischung) aufgegeben.

Die Einsatzmenge der als Hautverhinderungsmittel zugesetzten Sn(II)- und (Sn(IV)-Verbindungen richtet sich bei der erfindungsgemäßen Verwendung nach der Oberflächengröße des Lackes bzw. der Farbe in dem Aufbewahrungsgefäß (Oberfläche in dem geöffneten Vorratsgefäß). Sie liegt in der Größenordnung von ca. 0,02 g Sn-Verbindung der Formeln (I) und (II) auf ca. 24 $cm^2$ Lackoberfläche. Dieses bedeutet, daß die Zinnverbindungen nur in einer minimalen Dosierung zum Einsatz gelangen und so der eingetragene Zinngehalt (bezogen auf Gesamtsystem) im ppm-Bereich und damit sogar unter dem für Nahrungsmittel (in Konservendosen) erlaubten Grenzwert (Römpp-Lexikon Lebensmittelchemie; Thieme Verlag Stuttgart, New York 1995; Seite 952) liegt.

Der Vorteil der erfindungsgemäßen Verwendung der Sn(II)- und (Sn(IV)-Verbindungen als Hautverhinderungsmittel ist, daß sie aufgrund ihres sehr geringen Dampfdruckes bei Raumtemperatur als nicht-flüchtige Verbindungen anzusehen sind. Somit sind bei der Applikation der Farben keine Belastung für den Anwender oder die umgebende Luft, wie dies bei den heute benutzten Oximen der Fall ist.

**Beispiele**

1. Ausführungsformen:

Es werden folgende Verbindungen und deren Abmischungen eingesetzt:

a) Zinn-di-(2-ethylhexanoat),
b) Dibutylzinn-dilaurat,
c) Tributylzinn-(2-ethylhexanoat),
d) Zinn-oxalat,
e) 10 Gew.-% Zinn-di-(2-ethylhexanoat), 90 Gew.-% Sonnenblumenölmethylester,
f) 10 Gew.-% Zin-di(2-ethylhexanoat), 90 Gew.-% Sojaölmethylester.

2. Erfindungsgemäße Anwendung zur Hautverhinderung

Auf eine Offset-Druckfarbe (rot, von Fa. Hartmann), sikkativiert mit 2 Gew.-% eines Kombinationstrockners (Octa-Soligen[®] Trockner 26 der Borchers GmbH), welcher 2 Gew.-% Co-Metall (Co-II vorliegend) und 6 Gew.-% Mn-Metall (als Mn-II vorliegend) enthält, wurden verschiedene Mengen an erfindungsgemäßen Hautverhinderungsmitteln der Ausführungsformen a) und f) gegeben.

In einer ersten Versuchsreihe wurden jeweils 5,0 g der Farbe in ein zylindrisches Metallgefäß mit einem Durchmesser von 5,5 cm und einer Höhe von 1,0 cm gegeben. Anschließend wurden die in Tabelle 1 aufgeführten Mengen an Hautverhinderungsadditiven mittels einer Sprühdose auf diesen Ansatz appliziert. Von diesen Ansätzen wurde dann die Zeit gemessen, bis zu der keine Hautbildung zu beabachten war.

Tabelle 1

| Hautverhinderungsversuche an roter Offset-Druckfarbe (s.o) | |
|---|---|
| Zugabemenge: | Zeit bis zur Hautbildung: |
| kein Additiv | 3-4 Tage |
| 0,2 g Methylethylketoxim[1] | 5-6 Tage |
| 0,01 g Ausführungsform a) | 9-10 Tage |
| 0,02 g Ausführungsform a) | > 20 Tage |
| 0,1 g Ausführungsform f) | 9-10 Tage |
| 0,2 g Ausführungsform f) | > 20 Tage |
| 0,3 g Ausführungsform f) | > 20 Tage |

[1]: Borchinox M2 der Fa. Borchers GmbH

Die Trocknungseigenschaften der Druckfarbe wurden nicht negativ beeinflußt.

In einer zweiten Versuchsreihe wurden jeweils 1,0 kg der o.g. Farbe in einen Normbehälter für Druckfarben (annähernd zylinderische Metalldose, bei Füllung mit 1 kg Farbe hat der Lack darin eine Oberfläche von 153 cm$^2$) abgefüllt. Anschließend wurden die in Tabelle 2 aufgeführten Mengen an Hautverhinderungsadditiven mittels einer Sprühdose auf den Ansatz appliziert. Von diesen Ansätzen wurde dann die Zeit gemessen, bis zu der keine Hautbildung zu beobachten war.

Tabelle 2

| Hautverhinderungsversuche an roter Offet-Druckfarbe (s.o.) | |
|---|---|
| Zugabemenge: | Zeit bis zur Hautbildung: |
| kein Additiv | 3-4 Tage |
| 2,0 g Methylethylketoxim[1] | 7-8 Tage |
| 2,6 g Methylethylketoxim[1] | 13-14 Tage |
| 0,065 g Ausführungsform a) | 9-10 Tage |
| 0,13 g Ausführungsform a) | > 20 Tage |
| 0,65 g Ausführungsform f) | 9-10 Tage |
| 1,3 g Ausführungsform f) | > 20 Tage |
| 2,6 g Ausführungsform f) | > 20 Tage |

[1]: Borchinox M2 der Fa. Borchers GmbH

Die Trocknungseigenschaften der Druckfarbe wurden nicht negativ beeinflußt.

**Patentansprüche**

1.   Verwendung von Zinn-(II) und Zinn-(IV)-Verbindungen der allgemeinen Formeln (I) und (II)

$$R_1\text{-COO-Sn-OCC-}R_2 \qquad\qquad (I),$$

in welcher

R$^1$ und R$^2$ unabhängig voneinander für gegebenenfalls verzweigtes C$_1$-C$_{18}$-Alkyl, C$_5$-C$_7$-Cycloalkyl oder Phe-

nyl stehen,
und

$$(R_1\text{-}COO)(R_2\text{-}COO)_n\text{-}Sn\text{-}(R_3)(R_4)_m \qquad\qquad (II),$$

in welcher

$R^1$, $R^2$, $R^3$ und $R^4$ unabhängig voneinander für gegebenenfalls verzweigtes $C_1$-$C_{18}$-Alkyl, $C_5$-$C_7$-Cycloalkyl oder Phenyl,
und

n und m unabhängig voneinander für die Zahl 0, 1 oder 2 stehen, wobei (n + m) = 2 ist,
stehen, als Additive zur Verhinderung von Hautbildung in lufttrocknenden Bindemitteln.

2. Verwendung nach Anspruch 1, dadurch gekennzeichnet, daß die Verbindungen der Formeln (I) und (II) in organischen Lösemitteln gelöst sind.

3. Verwendung nach Anspruch 2, dadurch gekennzeichnet, daß niedrigviskose organische Flüssigkeiten eingesetzt werden.

4. Verwendung nach Anspruch 2, dadurch gekennzeichnet, daß $C_{14}$-$C_{22}$-Fettsäuremethylester eingesetzt werden.

5. Verwendung nach Anspruch 1 und 2, dadurch gekennzeichnet, daß sie in oxidativ trocknenden Druckfarben eingesetzt werden.

6. Verwendung nach Anspruch 1 und 2, dadurch gekennzeichnet, daß die Verbindungen auf die Oberfläche eines abgefüllten Lackansatzes appliziert werden.

7. Verwendung nach Anspruch 1 und 2, dadurch gekennzeichnet, daß sie in oxidativ trocknenden Spachtelmassen eingesetzt werden.

**Europäisches Patentamt**

## EUROPÄISCHER RECHERCHENBERICHT

Nummer der Anmeldung

EP 99 11 2303

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | DATABASE WPI<br>Section Ch, Week 8534<br>Derwent Publications Ltd., London, GB;<br>Class E12, AN 85-206217<br>XP002116864<br>& JP 60 130002 A (MATSUSHITA ELEC IND CO LTD), 11. Juli 1985 (1985-07-11)<br>* Zusammenfassung *<br>--- | 1-3,5 | C09D5/34<br>C09D7/04<br>C09D11/02 |
| A | DATABASE WPI<br>Section Ch, Week 7423<br>Derwent Publications Ltd., London, GB;<br>Class A82, AN 1974-42344V<br>XP002116865<br>& JP 48 091140 A (TOYO INK MFG CO),<br>27. November 1973 (1973-11-27)<br>* Zusammenfassung *<br>--- | 1,5 | |
| A | US 5 224 992 A (MCGINNIS EDGAR L)<br>6. Juli 1993 (1993-07-06)<br>* Ansprüche 1-5 *<br>----- | 1 | |

**RECHERCHIERTE SACHGEBIETE (Int.Cl.7)**

C09D

Der vorliegende Recherchenbericht wurde für alle Patentansprüche erstellt

| Recherchenort | Abschlußdatum der Recherche | Prüfer |
|---|---|---|
| DEN HAAG | 29. September 1999 | Schlicke, B |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........................................................
& : Mitglied der gleichen Patentfamilie,übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 99 11 2303

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-09-1999

| Im Recherchenbericht angeführtes Patentdokument | Datum der Veröffentlichung | Mitglied(er) der Patentfamilie | Datum der Veröffentlichung |
|---|---|---|---|
| JP 60130002 A | 11-07-1985 | JP 1706664 C <br> JP 3072164 B | 27-10-1992 <br> 15-11-1991 |
| JP 48091140 A | 27-11-1973 | JP 946250 C <br> JP 53024842 B | 30-03-1979 <br> 24-07-1978 |
| US 5224992 A | 06-07-1993 | KEINE | |

Für nähere Einzelheiten zu diesem Anhang : siehe Amtsblatt des Europäischen Patentamts, Nr. 12/82